# EUROPÄISCHE PATENTANMELDUNG

(11) **EP 1 205 456 A1**
(43) Veröffentlichungstag der Anmeldung: **15.05.2002**
(21) Anmeldenummer: 00124148.8
(22) Anmeldetag: 07.11.2000
(51) Int. Cl.: C05F 9/04, B03B 9/06, B07B 15/00, B29B 17/02

(54) **Verfahren und Vorrichtung zum Aufbereiten eines Kompostmaterials**

(71) Anmelder: W.U.R.M. GESELLSCHAFT ZUR WEITERVERARBEITUNG UNBEHANDELTER RÜCKSTANDS-MATERIALIEN mbH, 41749 Viersen (DE)
(72) Erfinder: Huskens, Jurgen, D-41748 Viersen (DE); Dell, Thomas, 55-52428 Julich (DE); Poggenburg, Uwe, D-41352 Korschenbroich (DE); Schlossmacher, Achim, D-47804 Krefeld (DE)
(74) Vertreter: Cohausz & Florack

(57) **Zusammenfassung**

Die Erfindung betrifft ein Verfahren zum Aufbereiten eines Kompostmaterials, bei dem das technische Problem, ein Verfahren und eine Vorrichtung anzugeben, mit denen das Material des Überlaufs soweit von Störstoffen befreit wird, daß dieses ohne negative Auswirkungen wieder dem Kompostierungsprozeß zugeführt werden kann, dadurch gelöst wird, daß das Kompostmaterial in einen das Fertigmaterial aufweisenden Unterlauf und in einen Störstoffe und Strukturmaterial aufweisenden Überlauf gesiebt wird, daß zumindest ein Teil der schweren Objekte des Überlaufes automatisiert aussortiert werden, daß zumindest ein Teil der Kunststoffe aufweisenden Störstoffe spektroskopisch identifiziert und automatisch aus dem Überlauf entfernt werden.

Die Erfindung betrifft auch eine Vorrichtung zum Aufbereiten eines Kompostmaterials.

## Beschreibung

Die Erfindung betrifft ein Verfahren sowie eine Vorrichtung zum Aussortieren eines Kompostmaterials, das beispielsweise in einer Kompostierungsanlage erzeugt worden ist.

Für eine Kompostierung wird zum einen Bioabfall und zum anderen Grünabfall, also pflanzliches Material aus Gärten, Parkanlagen und Friedhöfen, einem Kompostierungsprozeß unterzogen, um gezielt Kompostmaterial zu erzeugen. Dazu wird das gemischte Eingangsmaterial vorsortiert und von einem Teil der Störstoffe wie Plastik, Glas und Metallen gereinigt. Das Eingangsmaterial wird in sogenannten Mieten, also gleichmäßigen Materialanhäufungen in einer Rottehalle, aufgesetzt. Mikroorganismen setzen dann unter ständiger Luftzufuhr das organische Material biochemisch um und stufenweise wird das Eingangsmaterial in dieser Weise verrottet. Als Steuerparameter für die Verrottung dient die Temperatur innerhalb der Mieten sowie die gezielte Luftzufuhr und regelmäßige Umbettung der Mieten. Innerhalb eines Zeitraumes von circa 8 bis 12 Wochen liegt dann das Kompostmaterial als Endprodukt der Verrottung vor. Dabei bestimmt das Mischungsverhältnis von Bioabfällen und Grünabfällen die Eigenschaft des daraus zu erzeugenden Kompostproduktes.

Das Kompostmaterial wird mit Hilfe von verschiedenen Siebschritten in Fraktionen unterschiedlicher Körnung aufgeteilt. Dazu wird in einem ersten Siebschritt ein Unterlauf, der das Fertigmaterial enthält, und ein Überlauf, der Störstoffe und Strukturmaterial aufweist, voneinander getrennt. Das im Unterlauf enthaltene Material stellt dann das zu vermarktende Produkt dar.

Der Überlauf enthält neben dem organischen Strukturmaterial den größten Anteil der Störstoffe, die sich bereits im Eingangsmaterial befunden haben. Der Störstoffanteil ist dabei so hoch, daß das Material des Überlaufes weder in den Kompostierungsprozeß zurückgeführt noch einer anderen Verwertung zugeführt werden kann. Denn bei einer Rückführung in den Kompostierungsprozeß kommt es zu einer Aufkonzentration der Störstoffe, die während der mechanischen Abläufe innerhalb des Kompostierungsprozesses noch weiter zerkleinert werden. Dies führt nach mehreren Durchgängen dazu, daß die Siebschnitte für das Fertigmaterial reduziert und somit der Anteil an nicht verwertbarem Material erhöht werden muß.

Der Erfindung liegt das technische Problem zugrunde, ein Verfahren und eine Vorrichtung anzugeben, mit denen das Material des Überlaufs soweit von Störstoffen befreit wird, daß dieses ohne negative Auswirkungen wieder dem Kompostierungsprozeß zugeführt werden kann.

Das zuvor aufgezeigte technische Problem ist durch ein Verfahren nach Anspruch 1 gelöst, bei dem das Kompostmaterial in einen das Fertigmaterial aufweisenden Unterlauf und in einen Störstoffe und Strukturmaterial aufweisenden Überlauf gesiebt wird, bei dem zumindest ein Teil der schweren Objekte des Überlaufes automatisiert aussortiert werden, bei dem zumindest ein Teil der Kunststoffe aufweisenden Störstoffe spektroskopisch identifiziert und automatisch aus dem Überlauf entfernt werden.

Durch diese erfindungsgemäßen Verfahrensschritte werden schwere Objekte wie Steine und leichte, in der Regel flächige, also folienartige Kunststoffobjekte aussortiert, so daß im wesentlichen das gereinigte Material des Überlaufs, biologisches Strukturmaterial aufweist. Dieses Strukturmaterial wird beispielsweise durch Äste und Zweige gebildet, die bei dem zuvor durchlaufenen Kompostierungsprozeß noch nicht vollständig zerkleinert und verrottet werden konnten. Da das Strukturmaterial durch eine weitere mechanische Zerkleinerung und einer nachfolgenden erneuten Verrottung weiter verarbeitet werden kann, wird in vorteilhafter Weise der Umfang des ansonsten nicht weiter zu verarbeitenden Überlaufs verringert, so daß die Aufwendungen für eine Entsorgung verringert werden. Dieses erhöht nicht zuletzt auch die Rentabilität einer Kompostierungsanlage. Zudem ist das Strukturmaterial eine wertvolle Unterstützung für den erneut beginnenden Kompostierungsprozeß. Somit wird insgesamt eine optimale Umsetzung des Eingangsmaterials erreicht.

In bevorzugter Weise wird vor dem Einführen in die Siebvorrichtung ein Aussortieren von Metallen aufweisenden Objekten aus dem Kompostmaterial durchgeführt. Dadurch wird wirkungsvoll verhindert, daß sowohl in den Unterlauf als auch in den Überlauf nach dem Siebschritt Metall in den Materialien enthalten ist.

Das gereinigte Strukturmaterial kann entweder direkt einer erneuten Verrottung zugeführt werden, oder das Strukturmaterial wird zwischengelagert, um zu einem späteren Zeitpunkt einer erneuten Verrottung zugeführt zu werden. Dadurch können insbesondere die beim Grünabfall auftretenden jahreszeitlichen Schwankungen im Umfang und in der Zusammensetzung ausgeglichen werden und eine kontinuierliche gleichmäßige Qualität des Fertigmaterials gewährleistet werden.

Es hat sich als vorteilhaft erwiesen, daß das Kompostmaterial mit einem Siebschnitt im Bereich von 10 bis 50 mm, vorzugsweise 20 bis 30 mm und insbesondere von 24 mm gesiebt wird. Der entsprechende Unterlauf kann dann durch weitere Siebschnitte in Fraktionen mit unterschiedlichen Korngrößenverteilungen und somit Gebrauchsqualitäten aufgeteilt werden.

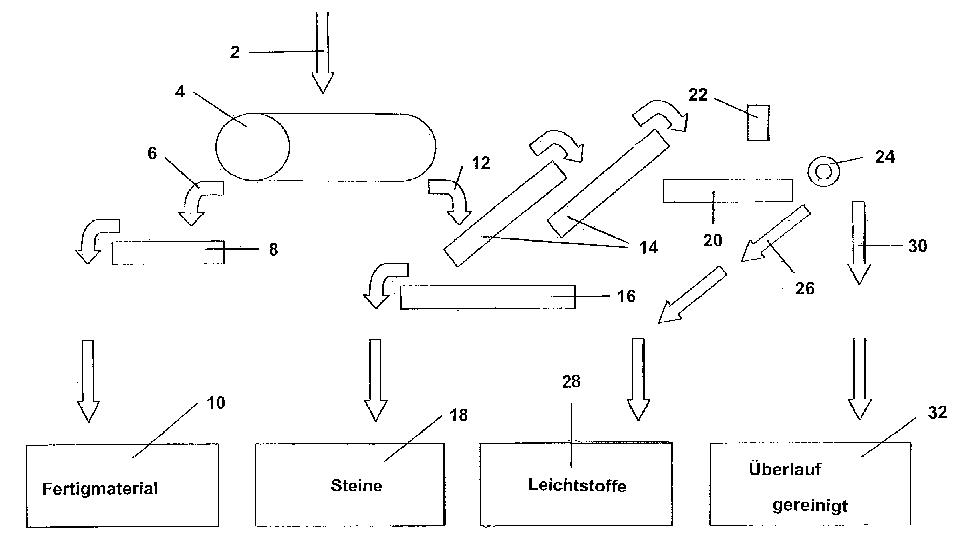

Das zuvor beschriebene technische Problem wird erfindungsgemäß auch durch eine Vorrichtung nach Anspruch 5 mit einer Fördereinrichtung zum Zuführen des Kompostmaterials, mit einer Siebvorrichtung zum Aufteilen des Kompostmaterials in einen das Fertigmaterial aufweisenden Unterlauf und in einen Störstoffe und Strukturmaterial aufweisenden Überlauf, mit mindestens einem schräg ansteigend verlaufenden Abscheideband zum Abscheiden von zumindest einem Teil der schweren Objekte des Überlaufes und mit einer spektroskopischen Sortiervorrichtung zum Aussortieren zumindest eines Teils der Kunststoffe aufweisenden Störstoffe des Überlaufes gelöst. Diese Vorrichtung wird im folgenden Anhand eines Ausführungsbeispieles näher erläutert, wobei auf die beigefügte Zeichnung bezug genommen wird. In dieser zeigt die einzige Figur eine schematische Darstellung der erfindungsgemäßen Vorrichtung zur Durchführung des Verfahrens zum Aufbereiten eines Kompostmaterials.

Eine Fördervorrichtung 2 in Form eines Transportbandes führt das Kompostmaterial einer Siebtrommel 4 zu. Die Siebtrommel 4 teilt das Kompostmaterial in einen Unterlauf 6 und einen Überlauf 12 auf, die jeweils als Pfeile dargestellt sind. Der Unterlauf wird mit Hilfe eines weiteren Förderbandes 8 zu einem Sammelbehälter 10 gebracht, in dem das Fertigmaterial aufbewahrt wird. Von diesem Sammelbehälter aus kann es entweder direkt verpackt werden oder es werden weitere Siebschritte durchgeführt, um das Fertigmaterial weiter zu konfektionieren.

Der Überlauf 12 weist Störstoffe und Strukturmaterial auf, wobei es der nachfolgenden Bearbeitung des Überlaufes 12 bedarf, um die Störstoffe zu entfernen.

Zunächst gelangt der Überlauf 12 auf zwei nacheinander geschaltete, schräg ansteigend verlaufende Abscheidebänder 14, deren Winkel zur Horizontalen so eingestellt ist, daß insbesondere schwere Objekte in Form von Steinen die Abscheidebänder herabrollen, während leichtere Störstoffe und das in der Regel wenig rollfähige Strukturmaterial zum oberen Ende der Abscheidebänder 14 gelangt. Unterhalb der Abscheidebänder ist ein weiteres Förderband 16 vorgesehen, das die Steine und weitere schwere Objekte zu einem Sammelbehälter 18 transportiert. Diese werden von dort aus dann einer Entsorgung zugeführt. Vom oberen Ende des zweiten Abscheidebandes 14 gelangt das Strukturmaterial und noch verbliebene Störstoffe auf ein Beschleunigungsband 20, das mit einer größeren Transportgeschwindigkeit als die zuvor beschriebenen Abscheidebänder betrieben wird. Dadurch kommt es zu einer starken Vereinzelung der einzelnen Strukturmaterialien und Störstoffen, so daß diese in der nachfolgend beschriebenen Weise aussortiert werden können.

Eine Infrarotspektroskopiervorrichtung 22 beleuchtet die auf dem Transportband liegenden Kunststoffe mit Infrarotlicht und nimmt das reflektierte Lichtspektrum auf. Sofern das reflektierte Lichtspektrum einem vorgegebenen Spektrum einer oder mehreren Arten von Kunststoffen entspricht, so wird mit der Transportgeschwindigkeit des Förderbandes 20 angepaßter Zeitverzögerung eine Druckluftdüse 24 aktiviert, die die im wesentlichen aus Kunststoff bestehenden Leichtstoffe in einen Leichtstoffstrom 26 abtrennt, die nachfolgend im Sammelbehälter 28 gesammelt werden. Das Strukturmaterial gelangt dann über den Materialstrom 30 in einen Sammelbehälter 32 in dem dann der gereinigte Überlauf 12 angesammelt und für eine weitere Kompostierung gelagert wird. Bei der dargestellten erfindungsgemäßen Vorrichtung zum Aufbereiten eines Kompostmaterials weist die Trommel 4 einen Siebschnitt von 24 mm auf. Dieses stellt jedoch nur ein Beispiel für eine Siebschnittgröße dar, denn erfindungsgemäß kann der Siebschnitt im Bereich von 10 bis 50 mm, vorzugsweise von 20 bis 30 mm angeordnet sein.

## Patentansprüche

1. Verfahren zum Aufbereiten von Kompostmaterial,
- bei dem das Kompostmaterial in einen das Fertigmaterial aufweisenden Unterlauf und in einen Störstoffe und Strukturmaterial aufweisenden Überlauf gesiebt wird,
- bei dem zumindest ein Teil der schweren Objekte des Überlaufes automatisiert aussortiert werden,
- bei dem zumindest ein Teil der Kunststoffe aufweisenden Störstoffe spektroskopisch identifiziert und automatisch aus dem Überlauf entfernt werden.

2. Verfahren nach Anspruch 1, bei dem das derart gereinigte Strukturmaterial des Überlaufs erneut dem Kompostierungsprozeß zugeführt wird.

3. Verfahren nach Anspruch 1 oder 2, bei dem vor dem Einführen in die Siebvorrichtung Metalle zumindest teilweise aus dem Kompostmaterial entfernt werden.

4. Verfahren nach einem der Ansprüche 1 bis 3, bei dem das Kompostmaterial mit einem Siebschnitt im Bereich von 10 bis 50 mm, vorzugsweise von 20 bis 30 mm, insbesondere von 24 mm gesiebt wird.

5. Vorrichtung zum Aufbereiten von Kompostmaterial,
- mit einer Fördervorrichtung (2) zum Zuführen des Kompostmaterials,
- mit einer Siebvorrichtung (4) zum Aufteilen des Kompostmaterials in einen das Fertigmaterial aufweisenden Unterlauf (6) und in einen Störstoffe und Strukturmaterial aufweisenden Überlauf (12),
- mit mindestens einem schräg ansteigend verlaufenden Abscheideband (14) zum Abscheiden von zumindest einem Teil der schweren Objekte des Überlaufes,
- mit einer spektroskopischen Sortiervorrichtung (22) zum Aussortieren zumindest eines Teils der Kunststoffe aufweisenden Störstoffe des Überlaufs und
- mit einer Fördervorrichtung zum Zuführen des gereinigten Strukturmaterials zu einer weiteren Kompostierung.

6. Vorrichtung nach Anspruch 5, **dadurch gekennzeichnet, daß** vor dem Einlauf in die Siebvorrichtung (4) eine Vorrichtung zum Abscheiden zumindest eines Teils der Metalle aufweisenden Objekte aus dem Überlauf vorgesehen ist.

7. Vorrichtung nach Anspruch 5 oder 6, **dadurch gekennzeichnet, daß** die Siebvorrichtung (2) einen Siebschnitt im Bereich von 10 bis 50 mm, vorzugsweise von 20 bis 30 mm, insbesondere von 24 mm aufweist.

8. Vorrichtung nach einem der Ansprüche 5 bis 7, **dadurch gekennzeichnet, daß** das am unteren Ende des mindestens einen Abscheidebandes (14) eine Födervorrichtung (16) zum Transportieren der schweren Objekte angeordnet ist.
